# EUROPÄISCHE PATENTSCHRIFT

(11) **EP 1 203 751 B1**
(45) Veröffentlichungstag und Bekanntmachung des Hinweises auf die Patenterteilung: **17.12.2003**
(21) Anmeldenummer: 01125019.8
(22) Anmeldetag: 20.10.2001
(51) Int. Cl.: C01B 3/38

(54) **Verfahren zum Betreiben einer Gaserzeugungsvorrichtung und Gaserzeugungsvorrichtung**
Method for operating a gas generating device and gas generating device
Méthode pour opérer un dispositif de production de gaz et dispositif de production de gaz

(30) Priorität: 04.11.2000 DE 10054846
(43) Veröffentlichungstag der Anmeldung: 08.05.2002
(73) Patentinhaber: Ballard Power Systems AG, 73230 Kirchheim / Teck-Nabern (DE)
(72) Erfinder: Döling, Fabian, 73765 Neuhausen a.d.F (DE); Griesmeier, Uwe, 88677 Markdorf (DE); Fischer, Martina, 71263 Weil der Stadt/Hausen (DE); Nussbaumer, Jochen, 73084 Salach (DE)
(74) Vertreter: Beyer, Andreas, Dr.

(56) Entgegenhaltungen:
- EP-A- 0 978 476
- WO-A-01/16022
- US-A- 4 400 180
- US-A- 4 479 810
- US-A- 4 490 156
- PATENT ABSTRACTS OF JAPAN vol. 1995, no. 03, 28. April 1995 (1995-04-28) & JP 06 349510 A (OSAKA GAS CO LTD;OTHERS: 01), 22. Dezember 1994 (1994-12-22)

## Beschreibung

Die vorliegende Erfindung betrifft ein Verfahren zum Betreiben einer Gaserzeugungsvorrichtung sowie eine Gaserzeugungsvorrichtung. Insbesondere betrifft die Erfindung ein Verfahren zum Betreiben einer Gaserzeugungsvorrichtung, bei dem durch Steuern des Massenstroms einzelner Edukte eine hohe Wasserstoffausbeute erzielt wird.

Brennstoffzellen werden aufgrund ihres hohen Wirkungsgrades zunehmend für die Erzeugung von elektrischer Energie sowohl für stationäre als auch für mobile Anwendungen eingesetzt. Dabei werden Brennstoffzellen üblicherweise mit Wasserstoff betrieben. Die Speicherung von Wasserstoff ist jedoch schwierig und technisch aufwendig, weshalb dieser in Form von Brennstoffen wie Kohlenwasserstoffen und Alkoholen gespeichert und entsprechend des Bedarfs der Brennstoffzelle mittels einer Gaserzeugungsvorrichtung gewonnen wird. In der Gaserzeugungsvorrichtung wird der Brennstoff unter Zugabe von Luft und/oder Wasser in ein wasserstoffreiches Gas umgesetzt.

Chemische Prozesse zur Wasserstofferzeugung aus Kohlenwasserstoffen oder Alkoholen sind die partielle Oxidation, die Dampfreformierung und die autotherme Reformierung. Die partielle 0-xidation ist eine exotherme Reaktion, bei der der Treibstoff unterstöchiometrisch mit Sauerstoff reagiert. In der Regel wird hierzu Luftsauerstoff verwendet. Bei der endothermen Dampfreformierung reagiert der Brennstoff mit Wasser unter Zuführung von Wärme. Die autotherme Reformierung ist eine Kombination zwischen partieller Oxidation und Dampfreformierung. Hierbei wird die Reaktionswärme der partiellen Oxidation für die Dampfreformierung bereitgestellt. Die Reaktion muß dabei nicht notwendigerweise autotherm durchgeführt werden.

Aus der deutschen Offenlegungsschrift 24 52 147 ist eine automatische Regeleinrichtung für einen Gaserzeuger bekannt, in dem aus Hydrazin in einer katalytischen exothermen Reaktion hochwertige Arbeitsgase erzeugt werden. Da bei vielen Katalysatormaterialien der Wirkungsgrad mit steigender Temperatur erhöht wird, soll eine Abkühlung der Katalysatortemperatur, die durch eine zu große Menge zugeführten kalten, flüssigen Brennstoffes bewirkt wird, vermieden werden. Dazu ist ein Drosselventil im Zulauf des flüssigen Brennstoffes vorgesehen, das über ein temperaturabhängiges Stellglied, nämlich einen Bimetall-Streifen, gesteuert wird. Das Drosselventil wird mit steigender Temperatur geöffnet und schließt sich bei einer Temperaturabnahme infolge einer zu starken Abkühlung durch den flüssigen Brennstoff wieder.

Aus der US-PS 4.400.180 ist ein Verfahren zur partiellen Oxidation und ein Steuersystem für ein kontinuierliches Erzeugen eines Synthesegases aus einem Brennstoff bekannt, wobei der Brennstoff während des Prozesses durch einen anderen Brennstoff ersetzt werden kann, ohne daß das System heruntergefahren oder der Druck im Gasgenerator abgesenkt werden muß. Dazu ist ein nicht-katalytischer Brenner zur partiellen Oxidation mit zentralen Leitungsmitteln, die radial von konzentrischen koaxialen äußeren Leitungsmitteln beabstandet sind, und mit koaxial ringförmigen Durchgängen, die sich zwischen beiden Leitungsmitteln erstrecken, vorgesehen. Das bekannte Steuersystem ermöglicht ein Umschalten zwischen unterschiedlichen Brennstoffströmen, die entweder durch die zentralen Leitungsmittel oder die ringförmigen Durchgänge fließen, und ein Einstellen der Flußraten des Reaktandenstromes des freien-sauerstoff-enthaltenden Gases. Dabei wird Wasser als Temperaturmoderator verwendet und wenn notwendig in die Reaktionszone geleitet, um das Atomverhältnis von freiem Sauerstoff/Kohlenstoff und das Gewichtsverhältnis von Wasser/Brennstoff in der Reaktionszone gemäß den Bedingungen für die autotherme Reformierung einzustellen.

Manuelle oder automatische Steuermittel sind zum Schalten und Steuern der Brennstoff-, Sauerstoff- und Dampfströme vorgesehen. Durch diese Mittel wird zwischen Basis-Brennstoff und Reserve-Brennstoff umgeschaltet und der Strom des freien Sauerstoff enthaltenden Gases und des Temperaturmoderators gesteuert, um einen effizienten und stabilen Gasausstoß aufrechtzuerhalten. Dazu werden über einzelne Sensoren die Flußraten der vier Ströme, nämlich Dampf, Basis-Brennstoff, Reserve-Brennstoff und freien Sauerstoff enthaltendes Gas bestimmt, die aktuellen Flußraten mit Soll-Flußraten verglichen und die Flußraten entsprechend eingestellt. Durch Steuern der Flußraten entsprechend der Soll-Flußraten wird die Temperatur im Brenner innerhalb eines Temperaturbereiches von ± 200°C konstant gehalten.

Aus der US-PS 4.490.156 ist ein Steuersystem für ein kontinuierliches Erzeugen eines Synthesegases mittels partieller Oxidation bekannt, bei dem ein Brennstoff durch einen anderen Brennstoff während des Verfahrens ersetzt werden kann, ohne daß ein Gasgenerator heruntergefahren oder der Druck abgesenkt werden muß. Dazu wird ein nicht-katalytischer Brenner, der zwei Abschnitte und eine schnelle Umschlag-Charakteristik aufweist, zum Durchführen der partiellen Oxidation der Brennstoffe verwendet. Das bekannte Steuersystem ist zum Schalten der Brennstoffströme, die in einem oder beiden Abschnitten des Brenners fließen, vorgesehen. Die Flußraten des Sauerstoffs, Brennstoffes und des Temperaturmoderators können in einem oder beiden Abschnitten des Brenners verändert werden, um dadurch das schnelle Umschlagen des Brenners zu bewirken. Separate Flußratensensoren und separate Flußratensteuermittel sind in jeder Zuführungsleitung für ein unabhängiges Überwachen und Einstellen der Flußraten der einzelnen Reaktionspartner vorgesehen. Die Temperatur und das Gewichtsverhältnis von Wasser/Brennstoff in der Reaktionszone wird durch Steuern der Flußraten des Reaktandenstromes des freien Sauerstoff enthaltenden Gases mit oder ohne Temperaturmoderator und gegebenenfalls unter Zugabe von zusätzlichem Wasser gesteuert.

Die aus dem Stand der Technik bekannten Steuersysteme sind entweder einfachst gestaltet - mit einem sehr eingschränkten Regelvermögen - oder, um eine variable Steuerung zu ermöglichen, kompliziert und aufwendig aufgebaut, da für jeden der Reaktionspartner getrennte Sensor- und Steuermittel zum Steuern der Durchflußraten vorgesehen sind.

Demgegenüber liegt der Erfindung die Aufgabe zugrunde, ein Verfahren zum Betrieb einer Gaserzeugungsvorrichtung sowie eine Gaserzeugungsvorrichtung bereitzustellen, wobei eine hohe Wasserstoffausbeute durch Steuern der Eduktströme mit kostengünstigem und konstruktiv einfach gehaltenem Steuer- bzw. Überwachungsaufwand, insbesondere durch eine Beschränkung der Anzahl von Steuer- und Überwachungsmitteln, gewährleistet wird.

Zur Lösung dieser Aufgabe wird zum einen ein Verfahren mit den Merkmalen des Anspruches 1 und zum anderen eine Gaserzeugungsvorrichtung mit den Merkmalen des Anspruches 12 vorgeschlagen.

Demnach wird ein Reaktor einer Gaserzeugungsvorrichtung zumindest annähernd adiabat betrieben und zum Einstellen und Aufrechterhalten eines gewünschten Verhältnisses von Molenstrom O₂ Sauerstoff /Molenstrom C-Atome Brennstoff (O₂/C-Verhältnis) der Edukte wird,
- die Temperatur der Edukte vor Einbringen in den Reaktor ermittelt,
- ein O₂/C-Verhältnis für die ermittelten Edukttemperaturen (O₂/C_{Edukttemp.}), bei dem theoretisch ein Umsatz der Edukte bei einer Soll-Reaktionstemperatur erfolgt, mittels Vergleichswerten bestimmt,
- das O₂/C-Verhältnis gemäß der Edukttemperaturen (O₂/C _{Edukttemp.}) durch Steuern des Massenstromes des sauerstoffhaltigen Eduktes bei bekanntem vorgegebenen Massestrom des kohlenwasserstoffhaltigen Eduktes und wahlweise Wasser oder durch Steuern des Massenstromes des kohlenwasserstoffhaltigen Eduktes bei bekanntem vorgegebenen Massestrom des sauerstoffhaltigen Eduktes und wahlweise Wasser eingestellt,
- eine momentane Reaktionstemperatur des Reaktors ermittelt,
- ein Korrekturwert ΔO₂/C für das O₂/C-Verhältnis mittels Vergleiswerten aus der Temperaturdifferenz von Ist-Reaktionstemperatur und Soll-Reaktionstemperatur bestimmt,
- das O₂/C-Verhältnis gemäß O₂/C _{Edukttemp.} und ΔO₂/C durch Steuern des Massenstromes des sauerstoffhaltigen Eduktes bei bekanntem vorgegebenen Massestrom des kohlenwasserstoffhaltigen Eduktes und wahlweise Wasser oder durch Steuern des Massenstromes des kohlenwasserstoffhaltigen Eduktes bei bekanntem vorgegebenen Massestrom des sauerstoffhaltigen Eduktes und wahlweise Wasser geändert.

Sowohl bei der partiellen Oxidation als auch bei der autothermen Reformierung wird die Wasserstoffausbeute durch die Vorheiztemperatur der Edukte am Reaktoreintritt, dem Verhältnis von Molenstrom O₂ / Molenstrom C-Atome _{Brennstoff}, also beispielsweise dem Verhältnis der zugeführten Luftmenge zur Brennstoffmenge, und bei einer Kombination von partieller Oxidation und Wasserdampfreformierung, der sogenannten autothermen Reformierung, zusätzlich durch die zugeführte Wassermenge beeinflußt. Dabei hängt die Wasserstoffausbeute stark vom O₂/C-Verhältnis ab. Schon geringe Abweichungen von einem optimalen Verhältnis bewirken Einbußen in der Ausbeute. Bei einem adiabat betriebenen Reaktor bewirken Änderungen im O₂/C-Verhältnis eine starke Änderung der Reaktionstemperatur. Aus der Reaktionstemperatur kann deshalb auf das O₂/C-Verhältnis im Reaktor geschlossen werden.

Erfindungsgemäß wird durch Messen der Edukttemperaturen und der momentanen Reaktionstemperatur das im Reaktor vorliegende O₂/C-Verhältnis bzw. die Abweichung von einem gewünschten O₂/C-Verhältnis für eine optimale Wasserstoffausbeute bestimmt.Das gewünschte O₂/C-Verhältnis wird dabei jeweils durch Steuern des Massenstromes eines Eduktes, das nachfolgend auch als gesteuertes Edukt bezeichnet wird, bei vorgegebenem bekannten Massenstrom der übrigen Edukte eingestellt. Die bekannten Massenströme können beispielsweise durch entsprechende Drosseln, Ventile, oder auch die Drehzahl eines Kompressor (einstellbar) festgelegt sein. Anhand der ermittelten Edukttemperaturen wird das gewünschte O₂/C-Verhältnis, bei dem eine optimale Wasserstoffausbeute erzielt wird, in einer (ersten) groben Näherung eingestellt. Dieses erfolgt auf der Grundlage von Vergleichswerten, die die Durchflußmengen des gesteuerten Eduktes bzw. den Steuerwert für das gesteuerte Edukt bei verschiedenen Edukttemperaturen beinhalten. Eine Korrektur der näherungsweisen Einstellung bzw. ein Einregeln/Ansteuern des gewünschten O₂/C-Verhältnisses wird an Hand der Abweichung von Ist-Reaktionstemperatur zur Soll-Reaktionstemperatur sowie mittels weiterer Vergleichswerte, die die Durchflußmengen bzw. Durchflußmengenänderungen des gesteuerten Eduktes bei verschiedenen Reaktionstemperaturabweichungen beinhalten, durchgeführt. Die Korrektur bis zum Erreichen bzw. das Einregeln des gewünschten O₂/C-Verhältnisses kann je nach Abweichung der Reaktionstemperatur, der gewünschten Genauigkeit des O₂/C-Verhältnisses und der Güte der Vergleichswerte einen einzigen oder auch mehrere Korrekturschritte benötigen. Das gewünschte O₂/C-Verhältnis wird also über eine Grund-/ Basiseinstellung eines O₂/C-Verhältnisses gemäß den Edukttemperaturen und eine Feineinstellung gemäß der Reaktionstemperatur eingestellt bzw. aufrechterhalten.

Die Messung der Edukttemperaturen und der Reaktionstemperatur kann gleichzeitig oder nacheinander, getaktet oder fortlaufend erfolgen. Das Einstellen des Massenstroms des gesteuerten Eduktes kann folglich auch durch eine Überlagerung des Einstellung gemäß der Edukttemperaturen sowie der Einstellung gemäß der Ist-Reaktionstemperatur erfolgen, d.h. nach Art zweier Steuer/Regelkreise z.B. in Form von zwei Reglern für das gesteuerte Edukt. Es ist aber auch möglich die ermittelten Temperaturen zu einem Steuerwert, z.B. durch Kalibrieren oder Wichten der ermittelten Temperaturen bzw. der Temperaturabweichung, zu verarbeiten und als Eingangsgröße für einen einzigen Regler vorzusehen.

Die Vergleichswerte werden durch Simulationsrechnungen oder experimentell ermittelt und können als Funktion, Kennlinie oder Wertetabelle hinterlegt sein. Dabei können die Vergleichswerte zum Beispiel in Rechnermitteln/Speichern gespeichert oder implizit in Form eines PID-Reglers (Proportional-Integral-Differential-Regler) verwirklicht sein.

In vorteilhafter Art und Weise wird die Steuerung bzw. die Kontrolle des O₂/C-Verhältnisses und damit der Durchflußmenge des gesteuerten Eduktes auf die Ermittlung von Reaktionstemperatur und Edukttemperaturen zurückgeführt. Die Ermittlung von Temperaturen ist konstruktiv einfacher als aufwendige Durchflußmengenbestimmungen. Eine explizite Messung der Durchflußmengen ist dabei nicht notwendig. Steuermittel werden nur für das zu steuernde Edukt, also entweder für das kohlenwasserstoffhaltige oder das sauerstoffhaltige Edukt, benötigt. Das erfindungsgemäße Verfahren eignet sich besonders für ein statisches System, bei dem die Menge des zu erzeugenden Wasserstoffes im wesentlichen gleich bleiben soll. Diese Wasserstoffmenge wird durch eine entsprechende Wahl des Massenstroms des bekannten vorgegebenen Eduktes vorgegeben.

Bei einer erfindungsgemäßen Gaserzeugungsvorrichtung ist demnach der Reaktor gegenüber der Umgebung thermisch isoliert, um einen annähernd adiabaten Betrieb zu ermöglichen und es sind Mittel zum Messen einer momentanen Reaktionstemperatur, Mittel zum Messen der Temperatur der Edukte sowie Rechnermittel zum Auswerten der Meßwerte und Berechnen von Steuerwerten für die Mittel zum Steuern des Massenstromes mindestens eines Eduktes vorgesehen.

Ein adiabater Reaktor läßt sich durch thermische Isolierung mit geeigneten Materialen ohne größeren Aufwand verwirklichen. Die Überwachung von Eduktströmen erfolgt mittelbar über Temperatursensoren. Temperatursensoren sind nicht nur kostengünstig sondern auch zuverlässig im Betrieb und einfach in der Handhabung.

Bei einer Weiterbildung des erfindungsgemäßen Verfahrens wird nur dann ein Korrekturwert ΔO₂/C bestimmt und ein korregiertes O₂/C-Verhältnis eingestellt, wenn die Temperaturdifferenz größer als ein Vorgabewert ist. Über die Größe des Vorgabewertes kann die Einstellgenauigkeit des gewünschten O₂/C-Verhältnisses bestimmt werden.

Bei einer vorteilhaften Ausgestaltung des erfindungsgemäßen Vefahrens wird im Fall des Einstellens des O₂/C-Verhältnisses durch Steuern des Massenstromes des sauerstoffhaltigen Eduktes der Massestrom des kohlenwasserstoffhaltigen Eduktes überwacht oder im Fall des Einstellens des O₂/C-Verhältnisses durch Steuern des Massenstromes des kohlenwasserstoffhaltigen Eduktes der Massestrom des sauerstoffhaltigen Eduktes überwacht und bei einer Änderung des Massenstroms des überwachten Eduktes das O₂/C-Verhältnis durch Nachführen des Massenstrom des gesteuerten Eduktes aufrechterhalten. Die Überwachung bzw. Ermittlung des Massenstroms des jeweils nicht gesteuerten Eduktes, nachfolgend als überwachtes Edukt bezeichnet, ermöglicht eine größere Flexibilität bei der Einstellung des O₂/C-Verhältnisses. Insbesondere läßt sich die zu erzeugende Wasserstoffmenge pro Zeiteinheit bei Beibehalten des gewünschten optimalen O₂/C-Verhältnisses durch Verändern des Massenstroms des überwachten Eduktes kontrolliert einstellen. Damit eignet sich das erfindungsgemäße Verfahren gerade für dynamische Systeme. Änderungen im Massestrom des überwachten Eduktes lassen sich zwar auch über Änderungen der Reaktionstemperatur ermitteln und ausgleichen, diese Regelung bzw. Steuerung reagiert auf schnelle Änderungen jedoch relativ träge. Insbesondere bei Steuerung des O₂/C-Verhältnisses über den Massestrom des kohlenwasserstoffhaltigen Eduktes also des Brennstoffes, führen Lastsprünge in der Erzeugung des wasserstoffhaltigen Synthesegases zu einer sprunghaften Änderung des Massenstroms des sauerstoffhaltigen Eduktes, also üblicherweise der zugeführten Luftmasse. Bei einem Lastsprung zu höherer Leistung (Erhöhung des Luftmassenstroms) wird eine Abweichung des O₂/C-Verhältnisses in Richtung zu höheren Temperaturen hin bewirkt. Weil die partielle Oxidation und die autotherme Reformierung ohnehin schon bei sehr hohen Temperaturen ablaufen, könnte dies zu einer hohen thermischen Belastung der Bauteile bis hin zu einem möglichen Versagen führen. Durch das Nachregeln des Brennstoffmassenstromes zu einem Zeitpunkt, bei dem im Reaktor noch keine starke Temperaturänderung eingetreten ist, werden hohe Temperaturspitzen verhindert, wie sie bei einer reinen Temperatursteuerung auftreten könnten. Insbesondere die Steuerung der Brennstoffmenge durch eine Überlagerung der beiden Steuermechanismen erlaubt einen sicheren und optimalen (dynamischen) Betrieb der Gaserzeugungsvorrichtung.

Bei einer zweckmäßigen Fortbildung des Verfahrens wird das Verhältnis von Wasser zu kohlenwasserstoffhaltigem Edukt (S/C-Verhältnis) bei einer Änderung des Massenstromes des kohlenwasserstoffhaltigen Edukts durch Nachführen des Massestroms des Wasser aufrechterhalten. Es hat sich gezeigt, daß das Verhältnis von Wasser zu kohlenstoffhaltigem Edukt die Wasserstoffausbeute, wenn auch in geringerem Maße als das O₂/C-Verhältnis, beeinflußt. Zwar führt eine höhere Wassermenge zu einer höheren Wasserstoffausbeute, aber je mehr Wasser dosiert wird, um so 'mehr Energie wird für die Verdampfung und Überhitzung benötigt. Da nicht beliebig viel Energie im System zur Verfügung steht, erniedrigt sich mit steigender Wasserdosierung die Vorheiztemperatur der Edukte. Bei zu großer Wasserzufuhr wird die Wasserstoffausbeute wegen zu geringer Eduktvorheiztemperatur wieder kleiner. Als vorteilhaft hat sich dabei ein S/C-Verhältniswert von 1,5 erwiesen. Zweckmäßigerweise wird deshalb bei einer Änderung des Brennstoffmassenstromes die Wassermenge entsprechend nachgeregelt.

Bei einer bevorzugten Ausführungsform des erfindungsgemäßen Verfahrens werden PID-Regler zum Steuern der Massenströme der Edukte eingesetzt, wobei als Eingangsgrößen für die PID-Regler die Edukttemperaturen, die Reaktionstemperatur und gegebenenfalls Werte für den Massenstrom des überwachten Eduktes sowie im Falle eines PID-Reglers zum Steuern der Wassermenge Werte für den Massenstrom des kohlenwasserstoffhaltigen Eduktes verwendet werden. Mit den PID-Reglern können die Eduktmassenströme auf eine einfache Art und Weise gesteuert bzw. geregelt werden. Dabei sind die Vergleichswerte in den PID-Reglern implizit in Form der Proportionalität zwischen Eingangsgröße und Stellgröße realisiert. Gegebenenfalls können die Meßwerte für Massenströme, Temperatur etc. zunächst in Rechnermitteln bearbeitet werden, bevor sie dem PID-Regler als Eingangsgrößen zugeführt werden.

Bei einer Weiterbildung des erfindungsgemäßen Verfahrens wird nur die Temperatur der Edukte ermittelt, deren Temperatureinfluß auf die Reaktionstemperatur in Hinsicht auf die gewünschte Einstellgenauigkeit des O₂/C-Verhältnisses nicht zu vernachlässigen ist. Die partielle Oxidation bzw. die autotherme Reformierung findet bei hohen Temperaturen statt. Die Reaktionstemperatur wird dabei je nach Ausgangstemperatur der Edukte unterschiedlich stark von diesen beeinflußt. Üblicherweise wird die sauerstoffhaltige Eduktkomponente vorgeheizt, während der Brennstoff dem Reaktor ohne Vorheizen zugeführt wird. Bei entsprechend großem Temperaturunterschied ist dann der Einfluß der Brennstofftemperatur auf die Reaktionstemperatur zu vernachlässigen. Durch die zweckmäßige Beschränkung kann der konstruktive und meßtechnische Aufwand weiter verringert werden.

Bei einer vorteilhaften Ausgestaltung der Erfindung wird eine Mehrzahl von Edukten vor Einbringen in den Reaktor miteinander gemischt und die Temperatur dieses Eduktgemisches ermittelt. Dadurch läßt sich der konstruktive und verfahrensmäßige Meßaufwand noch weiter verringern. Beispielsweise ist bei der autothermer Reformierung die Zusammenführung der sauerstoffhaltigen Komponente, also vorzugsweise der zugeführten Luft, mit Wasser zweckmäßig, so daß nur die Temperaur des Wasserdampf/Luft-Gemisches zu ermitteln ist.

Bei einer zweckmäßigen Fortbildung der Erfindung wird als kohlenstoffhaltiges Edukt flüssiger Brennstoff verwendet und das Einstellen des gewünschten O₂/C-Verhältnisses erfolgt durch Regulierung des Massenstroms des flüssigen Brennstoffes. Die Dosierung von Flüssigkeiten ist grundsätzlich einfacher und wesentlich schneller durchzuführen als die von Gasen, so daß sich eine schnellere Reaktionszeit des Systems bei gleichzeitig einfacheren Aufbau der Steuermittel realisieren läßt. Andererseits folgt daraus, daß gegebenfalls der Massenstrom des sauerstoffhaltigen Eduktes, üblicherweise zugeführte Luft, überwacht wird. Für das erfindungsgemäße Verfahren werden somit lediglich Temperatursensoren und ein Luftmassenensor sowie Rechner- und Steuermittel zum Steuern der Durchflußmenge von Brennstoff und Wasser benötigt.

Bei einer zweckmäßigen Weiterbildung des Verfahrens wird die momentane Reaktionstemperatur des Reaktors durch Messen der Temperatur der Katalysatoroberfläche und/oder der Temperatur der Produktgase ermittelt. Beide Verfahren eröffnen einen vernünftigen Zugang zur Reaktionstemperatur bei ausreichender Genauigkeit. Die Temperatur der Katalysatoroberfläche ist im allgemeinen etwas höher als die Temperatur der Produktgase. Dies kann jedoch bei der Berechnung der Temperaturdifferenz aus Istund Soll-Reaktionstemperatur ohne weiteres berücksichtigt werden.

Bei einer bevorzugten Ausführungsform der Gaserzeugungsvorrichtung umfassen die Mittel zum Zuführen und Steuern des Massenstroms des flüssigen Brennstoffes ein Einspritzventil und ein Druckregelventil. Der Massenstrom wird über die Öffnungszeit und/oder dem Druck des Einspritzventils gesteuert und läßt sich schnell und präzise einstellen. Einspritzsysteme werden bei der automobilen Motorentechnik standardmäßig verwendet und sind aufgrund langjähriger Erfahrungen zuverlässig zu betreiben.

Bei einer weiteren bevorzugten Ausführungsform der Erfindung ist ein Wärmetauscher zum Vorheizen der Edukte vorgesehen. Die Wasserstoffausbeute wird durch die Vorheiztemperatur der Edukte beeinflußt. Über den Wärmetauscher kann in vorteilhafter Art und Weise die Wärme der Produktgase zum Vorheizen der Edukte eingesetzt werden.

Bei einer vorteilhaften Weiterbildung der Erfindung ist der Wärmetauscher so ausgestaltet, daß für die autotherme Reformierung das sauerstoffhaltige Edukt und Wasser in dem Wärmetauscher gemischt, gemeinsam erhitzt und dem Reaktor als Mischgas zugeführt werden. Zum Vorheizen der Edukte wird nur eine einzige Einrichtung benötigt. Außerdem kann durch das Mischen und gemeinsame Erhitzen der Edukte die Bestimmung der Edukttemperaturen auf die einzelne Temperaturmessung des Mischgases reduziert werden.

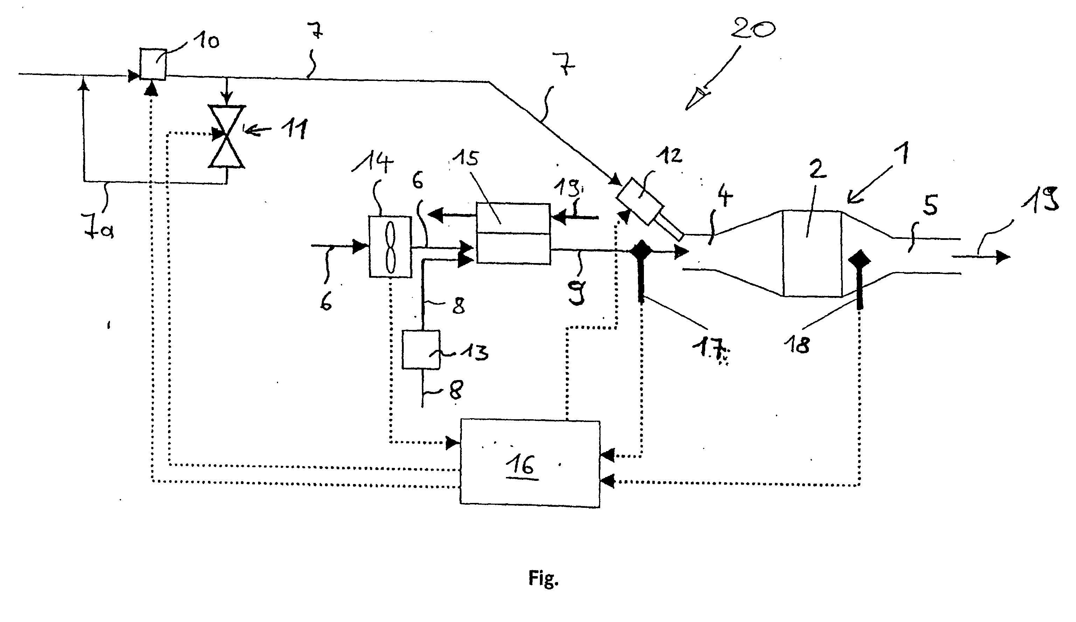

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung dargestellt und wird im folgenden unter Bezugnahme auf die Zeichnung näher erläutert.

Die einzige Figur zeigt ein schematisches Blockschaltbild einer erfindungsgemäßen Gaserzeugungsvorrichtung.

Eine erfindungsgemäße Gaserzeugungsvorrichtung 20 umfaßt einen Reaktor 1 mit Katalysator 2, in dem mittels partieller Oxidation oder autothermer Reformierung ein wasserstoffreiches Produktgas aus Edukten erzeugt wird. Bei den Edukten handelt es sich vorzugsweise um Brennstoff wie Benzin, Sauerstoff in Form von Luftsauerstoff sowie gegebenenfalls Wasser. Der Reaktor 1 hat einen Eingang 4, durch den die Edukte dem Katalysator 2 zugeführt werden, und einen Ausgang 5 zum Abführen von Synthesegas 19. Der Reaktor 1 kann beispielsweise als ein Rohrreaktor ausgeführt sein und ist durch eine (nicht dargestellte) Ummantelung aus geeigneten Materialien gegenüber der Umwelt thermisch isoliert.

Die Edukte werden dem Eingang 4 des Reaktors 1 über Zuleitungen 6, 7, 8, 9 zugeführt, wobei ein Mischen der Edukte teilweise im Reaktor 1 und teilweise in einer Mischstufe 15 erfolgt. Kohlenwasserstoffhaltiger Brennstoff wird über eine Leitung 7 und Zuluft wird über eine Leitung 6, 9 in den Reaktor 1 eingeleitet. Bei der sogenannten autothermen Reformierung wird zusätzlich Wasser über eine Leitung 8 zugeführt, in einer Mischstufe 15 beispielsweise durch feines Zerstäuben mit der Zuluft gemischt und über eine gemeinsame Leitung 9 in den Reaktor 1 eingeleitet. Die Mischstufe 15 kann gleichzeitig zum Vorheizen der Edukte dienen. Dazu ist die Mischstufe 15 als ein Wärmetauscher ausgeführt, in dem das Wasser/Luft-Gemisch mit der Abwärme des Synthesegases 19 vorzugsweise auf 400 °C - 700 °C vorgeheizt wird.

Erste und zweite Temperatursensoren 17, 18 sind zum Messen von Edukttemperatur bzw. momentaner Reaktionstemperatur vorgesehen. Der erste Temperatursensor 17 zum Messen der Temperatur der vorgeheizten Zuluft bzw. des Luft/Wasserdampf-Gemisches bei autothermer Reformierung ist in der Leitung 9 nahe des Eingangs 4 des Reaktors 1 angeordnet. Die momentane Reaktionstemperatur wird mit dem zweiten Temperatursensor 18 gemessen, der am Ausgang 5 des Reaktors 1 angeordnet ist und zur Ermittlung der Reaktionstemperatur die Temperatur der Katalysatoroberfläche oder die Temperatur des Synthesegases mißt. Die Bestimmung der Temperatur der Katalysatoroberfläche kann auch mittels eines optischen Sensors berührungslos erfolgen. Weiterhin ist zum Überwachen der Luftmenge ein Luftmengensensor 14 in der Zuleitung 6 der Zuluft angeordnet. Die benötigte Luftmenge wird in Abhängigkeit von der zu erzeugenden Wasserstoffmenge durch einen (nicht dargestellten) Kompressor zur Verfügung gestellt. Eine Überwachung der Luftmenge kann dabei auch über die Auswertung der Kompressordrehzahl erfolgen.

Die Temperatursensoren 17, 18 und der Luftmassensensor 14 sind mit Rechnermitteln 16 verbunden, die die ermittelten Meßwerte auswerten und Steuerwerte für die Steuermittel 10, 11, 12, 13 vorgeben. Zu diesem Zweck sind die Rechnermittel 16 auch mit den Steuermitteln 10, 11, 12 und 13 verbunden und umfassen Vergleichswerte zum Berechnen der Steuerwerte. Bei einer einfachen Ausführungsform der Steuerung sind die Rechnermittel als PID-Regler realisiert, wobei die Vergleichswerte in Form des Proportionsalitätsfaktors und des Stellbereiches des jeweiligen PID-Reglers vorgegeben sind.

Die Steuereinrichtungen 10, 11, 12, 13 zum Steuern der Massenströme von Brennstoff und Wasser sind in den Zuleitungen 7 und 8 vorgesehen. Speziell zum Steuern der Durchflußmenge des flüssigen Brennstoffes sind eine Pumpe 10 und ein Druckregelventil 11 in der Zuleitung 7 angeordnet. Über eine Beipass-Leitung 7a kann dabei ein Teil der Brennstoffmenge an die Eingangsseite der Pumpe 10 zurückgeführt werden. Es ist aber auch möglich, die Brennstoffmenge durch Steuern der Pumpe 10 selbst zu regulieren. Am reaktoreingangsseitigen Ende der Zuleitung 7 ist ein Einspritzventil 12 vorgesehen. Durch das Einspritzventil 12 wird der Brennstoff in dem Reaktorraum gleichmäßig verteilt. Weiterhin kann auch über das Einspritzventil 12 eine Steuerung der Brennstoffmenge erreicht werden. Für die Steuereinrichtung 13 zum Steuern der Wassermenge können dem Fachmann bekannte Einrichtungen wie Pumpen, Einspritzdüsen oder Ventile verwendet werden.

Gemäß dem erfindungsgemäßen Verfahren wird über den ersten Temperatursensor 17 die Temperatur der erhitzten Zuluft bzw. des erhitzten Luft/Wasserdampf-Gemisches gemessen. Die Brennstofftemperatur, die im Hinblick auf die Reaktionstemperatur gegenüber der erhitzten Zuluft bzw. des erhitzten Luft/Wasserdampf-Gemisches vernachlässigbar ist, wird nicht gemessen. Über den zweiten Temperatursensor 18 wird wie zuvor beschrieben die momentane Reaktionstemperatur ermittelt.

Aus der gemessenen Edukttemperatur wird ein O₂/C-Verhältnis bestimmt, daß theoretisch zu einem Umsatz der vorgeheizten Edukte bei der Soll-Reaktionstemperatur führt. Mit dieser Einstellung wird das gewünschte optimale O₂/C-Verhältnis in einer (ersten) groben Näherung vorgegeben. Dies geschieht mit Hilfe von Vergleichswerten, die den jeweiligen Edukttemperaturen ein bestimmtes O₂/C-Verhältnis in Form einer Funktion, Kennlinie oder Wertetabelle zuordnet. Das O₂/C-Verhältnis gemäß den Edukttemperaturen wird durch Steuern des Massenstromes des flüssigen Brennstoffes, eingestellt. Aus der Abweichung der gemessenen Reaktionstemperatur von der gewünschten Soll-Reaktionstemperatur wird ein Korrekturwert für das O₂/C-Verhältnis berechnet und ein korrigiertes O₂/C-Verhältnis wird durch entsprechende Änderung des Brennstoffmassenstromes eingestellt. Das O₂/C-Verhältnis und somit die Reaktionstemperatur wird nur dann nachgeregelt, wenn die Temperaturabweichung größer als ein vorgegebener Wert ist. Durch entsprechende Wahl des Vorgabewertes wird die Einstellgenauigkeit des optimalen O₂/C-Verhältnisses festgelegt.

Bei einem dynamischen Betrieb der erfindungsgemäßen Gaserzeugungsvorrichtung 20, d.h. der Erzeugung variabler Mengen Wasserstoff pro Zeiteinheit, wird zusätzlich die zugeführte Luftmenge überwacht. Die zu erzeugende Wasserstoffmenge wird dabei über die zugeführte Luftmenge festgelegt bzw. eingestellt. Die Luftmenge selbst wird durch einen (nicht dargestellten) Kompressor eingestellt. Bei einer Änderung des Luftmassestromes wird der Massenstrom des Brennstoffes entsprechend nachgeregelt. Dies geschieht auf einfache Art und Weise dadurch, daß das O₂/C-Verhältnis gemäß den Edukttemperaturen (O₂/C_{Edukttemperatur}) zusätzlich in Abhängigkeit von der ermittelten Luftmenge bestimmt und eingestellt wird. Mit anderen Worten: Der ermittelten Temperatur des Luft/Wasserdampf-Gemisches und der ermittelten Luftmenge wird mittels Vergleichswerten ein bestimmtes O₂/C-Verhältnis zugeordnet und durch Steuern des Brennstoffmassenstromes eingestellt. Dieses O₂/C-Verhältnis wird wie zuvor beschrieben bei ausreichend großer Abweichung von der Soll-Reaktionstemperatur gemäß der gemessenen Reaktionstemperatur durch Verändern des Brennstoffmassenstromes korrigiert.

Die Soll-Reaktionstemperatur wird ebenfalls wie die Vergleichswerte experimentell oder aus Simulationsrechnungen hinsichtlich eines optimalen O₂/C-Verhältnisses für eine hohe Wasserstoffausbeute ermittelt. Die Soll-Reaktionstemperatur hängt von den Reaktionsbedingungen, also verwendetem Katalysator, Dimension des Reaktors, vorgesehenen Leistungsdaten, Eduktmengen, dem verwendeten Brennstoff usw. ab. Statt der Soll-Reaktionstemperatur kann in den Rechnermitteln 16 auch eine Funktion der Soll-Reaktionstemperatur beispielsweise als Funktionen der Zeit, Zuluftmenge und/oder Edukttemperatur gespeichert werden. Dadurch kann ein spezielles Steuerverhalten bei bestimmten Randbedingungen, z.B. während des Warmlaufens nach einem Kaltstart erreicht werden. Die Soll-Reaktionstemperatur kann folglich als Einzelwert, Funktion oder in Form von Wertetabellen vorliegen.

Das erfindungsgemäße Verfahren wurde in der Praxis mit folgenden Eckdaten ausgeführt: Die partielle Oxidation oder die autotherme Reformierung des wasserstoffreichen Gases erfolgt vorzugsweise bei einer Reaktionstemperatur in einem Bereich zwischen 700°C und 1.000°C. Dabei wurde als optimale Reaktionstemperatur eine Temperatur von ca. 850°C ermittelt. Die Zuluft bzw. das Luft/Wasserdampf-Gemisch wird vorzugsweise auf ca. 500°C vorgeheizt. Für das Brennstoff/Wasser-Verhältnis wurde ein Wert von ca. 1,5 eingestellt. Bei dem verwendeten adiabaten Reaktor führt eine 10%ige (relative) Änderung des O₂/C-Verhältnisses zu einer Änderung der Reaktionstemperatur in der Größenordnung von 100°C. Das O₂/C-Verhältnis wird mit einer Genauigkeit im 1%-Bereich gesteuert, was in etwa einer Änderung der Reaktionstemperatur um 10°C entspricht.

## Patentansprüche

1. Verfahren zum Betreiben einer Gaserzeugungsvorrichtung (20) zum Erzeugen eines wasserstoffreichen Produktgases aus Edukten, wobei ein kohlenwasserstoffhaltiger Brennstoff unter Zugabe von Sauerstoff, insbesondere Luftsauerstoff, durch katalytische partielle Oxidation oder der kohlenwasserstoffhaltige Brennstoff unter Zugabe von Sauerstoff und Wasser durch eine sogenannte autotherme Reformierung mittels katalytischer Wasserdampfreformierung und katalytischer partieller Oxidation in einem Reaktor (1) zu dem wasserstoffreichen Produktgas umgesetzt werden,
**dadurch gekennzeichnet,**
**daß** der Reaktor (1) zumindest annähernd adiabatisch betrieben wird und zum Einstellen und Aufrechterhalten eines gewünschten Verhältnisses von Molenstrom O_{2 Sauerstoff} / Molenstrom C-Atome _{Brennstoff} (O₂/C-Verhältnis) der Edukte
- die Temperatur der Edukte vor Einbringen in den Reaktor ermittelt,
- ein O₂/C-Verhältnis für die ermittelten Edukttemperaturen (O₂/C_{Edukttemp.}), bei dem theoretisch ein Umsatz der Edukte bei einer Soll-Reaktionstemperatur erfolgt, mittels Vergleichswerten bestimmt,
- das O₂/C-Verhältnis gemäß den Edukttemperaturen (O₂/C Edukttemp.) durch Steuern des Massenstromes des sauerstoffhaltigen Eduktes bei bekanntem vorgegebenen Massestrom des kohlenwasserstoffhaltigen Eduktes und wahlweise Wasser oder durch Steuern des Massenstromes des kohlenwasserstoffhaltigen Eduktes bei bekanntem vorgegebenen Massestrom des sauerstoffhaltigen Eduktes und wahlweise Wasser eingestellt,
- eine momentane Reaktionstemperatur des Reaktors ermittelt,
- ein Korrekturwert ΔO₂/C für das O₂/C-Verhältnis mittels Vergleichswerten aus der Temperaturdifferenz von Ist-Reaktionstemperatur und Soll-Reaktionstemperatur bestimmt,
- das O₂/C-Verhältnis gemäß O₂/C Edukttemp. und ΔO₂/C durch Steuern des Massenstromes des sauerstoffhaltigen Eduktes bei bekanntem vorgegebenen Massestrom des kohlenwasserstoffhaltigen Eduktes und wahlweise Wasser oder durch Steuern des Massenstromes des kohlenwasserstoffhaltigen Eduktes bei bekanntem vorgegebenen Massestrom des sauerstoffhaltigen Eduktes und wahlweise Wasser geändert wird.

2. Verfahren nach Anspruch 1, **dadurch gekennzeichnet, daß** nur dann ein Korrekturwert ΔO₂/C bestimmt und ein korregiertes O₂/C-Verhältnis eingestellt wird, wenn die Temperaturdifferenz größer als ein Vorgabewert ist.

3. Verfahren nach Anspruch 1 oder 2, **dadurch gekennzeichnet, daß** im Fall des Einstellens des O₂/C-Verhältnisses durch Steuern des Massenstromes des sauerstoffhaltigen Eduktes der Massestrom des kohlenwasserstoffhaltigen Eduktes überwacht oder im Fall des Einstellens des O₂/C-Verhältnisses durch Steuern des Massenstromes des kohlenwasserstoffhaltigen Eduktes der Massestrom des sauerstoffhaltigen Eduktes überwacht sowie bei einer Änderung des Massenstroms des überwachten Eduktes das O₂/C-Verhältnis durch Nachregeln des Massenstrom des gesteuerten Eduktes aufrechterhalten wird.

4. Verfahren nach einem der Ansprüche 1 bis 3, **dadurch gekennzeichnet, daß** das Verhältnis von Wasser zu kohlenwasserstoffhaltigem Edukt bei einer Änderung des Massenstromes des kohlenwasserstoffhaltigen Edukts durch Nachregeln des Massestroms des Wasser aufrechterhalten wird.

5. Verfahren nach einem der Ansprüche 1 bis 4, **dadurch gekennzeichnet, daß** PID-Regler zum Steuern der Massenströme der Edukte eingesetzt werden, wobei als Eingangsgrößen für die PID-Regler die Edukttemperaturen, die Reaktionstemperatur und wahlweise Werte für den Massenstrom des überwachten Eduktes und im Falle einer autothermen Reformierung für einen PID-Regler zum Steuern der Wassermenge Werte für den Massenstrom der kohlenwasserstoffhaltigen Eduktes verwendet werden.

6. Verfahren nach einem der Ansprüche 1 bis 5, **dadurch gekennzeichnet, daß** nur die Temperatur der Edukte ermittelt wird, deren Temperatureinfluß auf die Reaktionstemperatur in Hinsicht auf die gewünschte Einstellgenauigkeit des O₂/C-Verhältnis nicht zu vernachlässigen ist.

7. Verfahren nach einem der Ansprüche 1 bis 6, **dadurch gekennzeichnet, daß** eine Mehrzahl Edukte vor Einbringen in den Reaktor miteinander gemischt werden und die Temperatur dieses Eduktgemisches ermittelt wird.

8. Verfahren nach einem der Ansprüche 1 bis 7, **dadurch gekennzeichnet, daß** als kohlenwasserstoffhaltiges Edukt ein flüssiger Brennstoff verwendet wird und das Einstellen des gewünschten O₂/C-Verhältnisses durch Steuern des Massenstroms des flüssigen Brennstoffes erfolgt.

9. Verfahren nach einem der Ansprüche 1 bis 8, **dadurch gekennzeichnet, daß** Alkohole, insbesondere Methanol, Liquified Petrol Gas, Natural Gas, Butan, Propan und konventionelle flüssige Treibstoffe, insbesondere Benzin und Diesel, als Brennstoffe verwendet werden.

10. Verfahren nach einem der Ansprüche 1 bis 9, **dadurch gekennzeichnet, daß** die momentane Reaktionstemperatur des Reaktors durch Messen der Temperatur der Katalysatoroberfläche und/oder der Temperatur der Produktgase ermittelt wird.

11. Verfahren nach einem der Ansprüche 1 bis 10, **dadurch gekennzeichnet, daß** die Soll-Reaktionstemperatur für ein optimales O₂/C-Verhältnis hinsichtlich Wasserstoffausbeute, die Vergleichswerte für das O₂/C-Verhältnis der Edukttemperaturen (O₂/C_{Edukttemp.}) und die Vergleichswerte für den Korrekturwert ΔO₂/C aus Simulationsrechnungen oder experimentell ermittelt werden.

12. Gaserzeugungsvorrichtung zum Ausführen des Verfahrens nach einem der Ansprüche 1 bis 11, mit einem Reaktor (1) mit Katalysator (2) zum Erzeugen eines wasserstoffreichen Produktgases aus Edukten durch partielle Oxidation oder autotherme Reformierung, Mitteln (6, 7, 8, 9) zum Zuführen von Edukten und Abführen von Produkten und Mitteln (10, 11, 12, 13) zum Steuern des Massenstromes der Edukte, **dadurch gekennzeichnet, daß** der Reaktor (1) gegenüber der Umgebung thermisch isoliert ist, um einen annähernd adiabaten Betrieb zu ermöglichen, und Mittel (18) zum Messen einer momentanen Reaktionstemperatur, Mittel (17) zum Messen der Temperatur der Edukte sowie Rechnermittel (16) zum Auswerten der Meßwerte und Berechnen von Steuerwerten für die Mittel (10, 11, 12, 13) zum Steuern des Massenstromes mindestens eines Eduktes vorgesehen sind.

13. Gaserzeugungsvorrichtung nach Anspruch 12, **dadurch gekennzeichnet, daß** die Mittel (18) zum Messen der momentanen Reaktionstemperatur ein Temperatursensor zum Messen der Katalysatoroberflächentemperatur und/oder der Produktgastemperatur sind.

14. Gaserzeugungsvorrichtung nach Anspruch 12 oder 13, **dadurch gekennzeichnet, daß** die Vorrichtung einen Sensor (14) zum Ermitteln des Massenstroms des sauerstoffhaltigen oder des kohlenwasserstoffhaltigen Eduktes umfaßt.

15. Gaserzeugungsvorrichtung nach einem der Ansprüche 12 bis 14, **dadurch gekennzeichnet, daß** die Rechnermittel 16 und/oder Steuermittel (10, 11, 12, 13) PID-Regler umfassen.

16. Gaserzeugungsvorrichtung nach einem der Ansprüche 12 bis 15, **dadurch gekennzeichnet, daß** zum Steuern des Massenstroms des flüssigen Brennstoffes ein Einspritzventil (12) und/oder ein Druckregelventil (11)vorgesehen ist.

17. Gaserzeugungsvorrichtung nach einem der Ansprüche 12 bis 16, **dadurch gekennzeichnet, daß** ein Wärmetauscher (15) zum Vorheizen der Edukte vorgesehen ist.

18. Gaserzeugungsvorrichtung nach Anspruch 17, **dadurch gekennzeichnet, daß** der Wärmetauscher (15) so ausgestaltet ist, daß für die autotherme Reformierung von Brennstoff ein sauerstoffhaltiges Edukt und Wasser im Wärmetauscher gemischt, erhitzt und als Mischgas dem Reaktor (1) zugeführt wird.

## Claims

1. A process for operating a gas-generating device (20) for generating a hydrogen-rich product gas from educts, wherein a hydrocarbonaceous fuel, subject to addition of oxygen, in particular atmospheric oxygen, is converted in a reactor (1) to the hydrogen-rich product gas by catalytic partial oxidation, or the hydrocarbonaceous fuel, subject to addition of oxygen and water, is converted in a reactor (1) to the hydrogen-rich product gas by so-called autothermal reforming by means of catalytic steam reforming and catalytic partial oxidation,
**characterised in that**
the reactor (1) is operated at least approximately adiabatically and for the purpose of adjusting and maintaining a desired ratio of molar flow O_{2 oxygen} to molar flow C atoms fuel (O₂/C ratio) of the educts
- the temperature of the educts is ascertained prior to introduction into the reactor,
- an O₂/C ratio for the ascertained educt temperatures (O₂/C _{educt temp.)}, at which theoretically a conversion of the educts takes place at a set reaction temperature, is determined by means of comparative values,
- the O₂/C ratio according to the educt temperatures (O₂/C educt temp.) is adjusted by controlling the mass flow of the oxygenous educt at known predetermined mass flow of the hydrocarbonaceous educt and optionally water or by controlling the mass flow of the hydrocarbonaceous educt at known predetermined mass flow of the oxygenous educt and optionally water,
- an instantaneous reaction temperature of the reactor is ascertained,
- a correction value ΔO₂/C for the O₂/C ratio is determined by means of comparative values from the temperature difference of actual reaction temperature and set reaction temperature,
- the O₂/C ratio according to O₂/C _{educt temp.} and ΔO₂/C is changed by controlling the mass flow of the oxygenous educt at known predetermined mass flow of the hydrocarbonaceous educt and optionally water or by controlling the mass flow of the hydrocarbonaceous educt at known predetermined mass flow of the oxygenous educt and optionally water.

2. Process according to Claim 1, **characterised in that** a correction value ΔO₂/C is determined and a corrected O₂/C ratio is adjusted only when the temperature difference is greater than a preset value.

3. Process according to Claim 1 or 2, **characterised in that** in the case of adjustment of the O₂/C ratio by controlling the mass flow of the oxygenous educt the mass flow of the hydrocarbonaceous educt is monitored or in the case of adjustment of the O₂/C ratio by controlling the mass flow of the hydrocarbonaceous educt the mass flow of the oxygenous educt is monitored and also in the event of a change in the mass flow of the monitored educt the O₂/C ratio is maintained by readjusting the mass flow of the controlled educt.

4. Process according to one of Claims 1 to 3,
**characterised in that** the ratio of water to hydrocarbonaceous educt in the event of a change in the mass flow of the hydrocarbonaceous educt is maintained by readjusting the mass flow of the water.

5. Process according to one of Claims 1 to 4,
**characterised in that** PID controllers are employed for the purpose of controlling the mass flows of the educts, whereby by way of input variables for the PID controllers use is made of the educt temperatures, the reaction temperature and optionally values for the mass flow of the monitored educt, and in the case of autothermal reforming use is made of values for the mass flow of the hydrocarbonaceous educt for a PID controller for the purpose of controlling the amount of water.

6. Process according to one of Claims 1 to 5,
**characterised in that** only the temperature of those educts is ascertained, the temperature influence of which on the reaction temperature cannot be disregarded with respect to the desired accuracy of adjustment of the O₂/C ratio.

7. Process according to one of Claims 1 to 6,
**characterised in that** a plurality of educts are mixed with one another prior to being introduced into the reactor, and the temperature of this educt mixture is ascertained.

8. Process according to one of Claims 1 to 7,
**characterised in that** a liquid fuel is used as hydrocarbonaceous educt, and adjustment of the desired O₂/C ratio is effected by controlling the mass flow of the liquid fuel.

9. Process according to one of Claims 1 to 8,
**characterised in that** alcohols, in particular methanol, liquefied petroleum gas, natural gas, butane, propane and conventional liquid motor fuels, in particular petrol and diesel, are used as fuels.

10. Process according to one of Claims 1 to 9,
**characterised in that** the instantaneous reaction temperature of the reactor is ascertained by measuring the temperature of the surface of the catalyst and/or the temperature of the product gases.

11. Process according to one of Claims 1 to 10,
**characterised in that** the set reaction temperature for an optimal O₂/C ratio with regard to hydrogen yield, the comparative values for the O₂/C ratio of the educt temperatures (O₂/C _{educt temp.}) and the comparative values for the correction value ΔO₂/C are ascertained from simulation calculations or experimentally.

12. A gas-generating device for implementing the process according to one of Claims 1 to 11, with a reactor (1) with catalyst (2) for generating a hydrogen-rich product gas from educts by partial oxidation or autothermal reforming, means (6, 7, 8, 9) for supplying educts and removing products, and means (10, 11, 12, 13) for controlling the mass flow of the educts, **characterised in that** the reactor (1) is thermally insulated in relation to the environment in order to enable approximately adiabatic operation, and means (18) for measuring an instantaneous reaction temperature, means (17) for measuring the temperature of the educts as well as computational means (16) for evaluating the measured values and calculating control values for the means (10, 11, 12, 13) for controlling the mass flow of at least one educt are provided.

13. Gas-generating device according to Claim 12,
**characterised in that** the means (18) for measuring the instantaneous reaction temperature are a temperature sensor for measuring the catalyst-surface temperature and/or for measuring the product-gas temperature.

14. Gas-generating device according to Claim 12 or 13,
**characterised in that** the device comprises a sensor (14) for ascertaining the mass flow of the oxygenous educt or of the hydrocarbonaceous educt.

15. Gas-generating device according to one of Claims 12 to 14, **characterised in that** the computational means 16 and/or control means (10, 11, 12, 13) comprise PID controllers.

16. Gas-generating device according to one of Claims 12 to 15, **characterised in that** an injection valve (12) and/or a pressure-regulating valve (11) is/are provided for the purpose of controlling the mass flow of the liquid fuel.

17. Gas-generating device according to one of Claims 12 to 16, **characterised in that** a heat-exchanger (15) is provided for the purpose of preheating the educts.

18. Gas-generating device according to Claim 17,
**characterised in that** the heat-exchanger (15) is configured in such a way that for the autothermal reforming of fuel an oxygenous educt and water are mixed in the heat-exchanger, are heated and are supplied to the reactor (1) in the form of mixed gas.

## Revendications

1. Procédé pour le fonctionnement d'un dispositif de production de gaz (20) pour la production d'un produit gazeux riche en hydrogène à partir d'éduits, un combustible contenant de l'hydrocarbure étant transformé dans un réacteur (1) en ledit produit gazeux riche en hydrogène par oxydation partielle catalytique sous addition d'oxygène, plus particulièrement d'oxygène atmosphérique, ou par reformage autothermique à l'aide d'une réaction de vaporeformage et d'une oxydation partielle catalytique sous addition d'oxygène et d'eau, **caractérisé en ce que**
le réacteur (1) fonctionne pour le moins de manière proche de l'adiabatique, et, de façon à ajuster et à conserver une proportion souhaitée du flux molaire de O_{2 oxygène} sur le flux molaire d'atomes de carbone _{combustible} (rapport O₂/C) des éduits,
- la température des éduits est mesurée avant leur introduction dans le réacteur,
- un rapport O₂/C, dans le cadre duquel une transformation des éduits s'effectue théoriquement en présence d'une température réactionnelle théorique, est, pour les températures mesurées des éduits (O₂/C_{temp. de l'éduit}), déterminé à l'aide de valeurs comparatives,
- le rapport O₂/C est, conformément aux températures mesurées des éduits (O₂/C_{temp. de l'éduit),} ajusté par réglage du flux massique de l'éduit contenant de l'oxygène en présence d'un flux massique prédéfini et connu de l'éduit contenant de l'hydrocarbure et optionnellement de l'eau, ou ajusté par réglage du flux massique de l'éduit contenant de l'hydrocarbure en présence d'un flux massique prédéfini et connu de l'éduit contenant de l'oxygène et optionnellement de l'eau,
- une température réactionnelle momentanée du réacteur est déterminée,
- une valeur de correction ΔO₂/C est, pour le rapport O₂/C, déterminée à l'aide de valeurs comparatives résultant de l'écart de température entre la température réactionnelle réelle et la température réactionnelle théorique,
- le rapport O₂/C est, conformément à O₂/C_{temp. de l'édult} et à ΔO₂/C, modifié par réglage du flux massique de l'éduit contenant de l'oxygène en présence d'un flux massique prédéfini et connu de l'éduit contenant de l'hydrocarbure et optionnellement de l'eau, ou modifié par réglage du flux massique de l'éduit contenant de l'hydrocarbure en présence d'un flux massique prédéfini et connu de l'éduit contenant de l'oxygène et optionnellement de l'eau.

2. Procédé selon la revendication 1, **caractérisé en ce qu'**une valeur de correction ΔO₂/C est déterminée, et un rapport O₂/C corrigé ajusté, uniquement lorsque l'écart de température excède une valeur donnée.

3. Procédé selon la revendication 1 ou 2, **caractérisé en ce que**, dans le cas où le rapport O₂/C est ajusté par réglage du flux massique de l'éduit contenant de l'oxygène, le flux massique de l'éduit contenant de l'hydrocarbure est surveillé, ou, dans le cas où le rapport O₂/C est ajusté par réglage du flux massique de l'éduit contenant de l'hydrocarbure, le flux de l'éduit contenant de l'oxygène est surveillé, et, dans le cas où le flux massique de l'éduit surveillé est modifié, le rapport O₂/C est maintenu par ajustage ultérieur du flux massique de l'éduit régulé.

4. Procédé selon l'une des revendications 1 à 3, **caractérisé en ce que** le rapport eau/éduit contenant de l'hydrocarbure est, dans le cas où le flux massique de l'éduit contenant de l'hydrocarbure est modifié, maintenu par ajustage ultérieur du flux massique de l'eau.

5. Procédé selon l'une des revendications 1 à 4, **caractérisé en ce que** des régulateurs P.I.D. sont utilisés pour le réglage des flux massiques des éduits, les températures de l'éduit, la température réactionnelle et optionnellement des valeurs pour le flux massique de l'éduit surveillé étant utilisées comme grandeurs d'entrée pour les régulateurs P.I.D., et, dans le cas d'un reformage autothermique, des valeurs pour le flux massique de l'éduit contenant de l'hydrocarbure étant utilisées pour un régulateur P.I.D. destiné au réglage de la quantité d'eau.

6. Procédé selon l'une des revendications 1 à 5, **caractérisé en ce qu'**on mesure uniquement la température des éduits dont l'effet thermique sur la température réactionnelle n'est pas négligeable du point de vue de la précision de réglage du rapport O₂/C.

7. Procédé selon l'une des revendications 1 à 6, **caractérisé en ce qu'**un grand nombre d'éduits sont mélangés les uns aux autres avant leur introduction dans le réacteur, et la température de ce mélange est mesurée.

8. Procédé selon l'une des revendications 1 à 7, **caractérisé en ce qu'**un combustible liquide est utilisé comme éduit contenant de l'hydrocarbure et l'ajustage du rapport O₂/C souhaité est effectué par réglage du flux massique du combustible liquide.

9. Procédé selon l'une des revendications 1 à 8, **caractérisé en ce que** des alcools, en particulier du méthanol, du LPG, du gaz naturel, du butane, du propane et des carburants liquides classiques, en particulier de l'essence et du diesel, sont utilisés comme combustibles.

10. Procédé selon l'une des revendications 1 à 9, **caractérisé en ce que** la température réactionnelle momentanée du réacteur est détectée par mesure de la température de la surface du catalyseur et/ou de la température des produits gazeux.

11. Procédé selon l'une des revendications 1 à 10, **caractérisé en ce que** la température réactionnelle théorique en faveur d'un rapport O₂/C optimal pour un rendement élevé en hydrogène, les valeurs comparatives pour le rapport O₂/C des températures des éduits (O_{2/}Cₜₑₘₚ. _{de l'éduit}) et les valeurs comparatives pour la valeur de correction ΔO₂/C sont déterminées à partir de calculs de simulation ou par voie expérimentale.

12. Dispositif de production de gaz pour la mise en oeuvre du procédé selon l'une des revendications 1 à 11, avec un réacteur (1) comprenant un catalyseur (2) pour la production d'un produit gazeux riche en hydrogène à partir d'éduits par oxydation partielle ou par reformage autothermique, des moyens (6, 7, 8, 9) permettant l'apport d'éduits et l'évacuation de produits, et des moyens (10, 11, 12, 13) pour le réglage du flux massique des éduits, **caractérisé en ce que** le réacteur (1) est isolé thermiquement par rapport à l'environnement afin de permettre un fonctionnement proche de l'adiabatique, et **en ce qu'**il est prévu des moyens (18) pour la mesure d'une température réactionnelle momentanée, des moyens (17) pour la mesure de la température des éduits ainsi que des moyens de calcul (16) pour l'appréciation des valeurs mesurées et le calcul de valeurs de réglage pour les moyens (10, 11, 12, 13) destinés au réglage du flux massique d'au moins un éduit.

13. Dispositif de production de gaz selon la revendication 12, **caractérisé en ce que** les moyens (18) permettant la mesure de la température réactionnelle momentanée consistent en un capteur thermique destiné à la mesure de la température de la surface du catalyseur et/ou de la température du produit gazeux.

14. Dispositif de production de gaz selon la revendication 12 ou 13, **caractérisé en ce que** le dispositif comprend un capteur (14) permettant la détermination du flux massique de l'éduit contenant de l'oxygène ou de l'hydrocarbure.

15. Dispositif de production de gaz selon la revendication 12 à 14, **caractérisé en ce que** les moyens de calcul (16) et/ou les moyens de réglage (10, 11, 12, 13) comprennent des régulateurs P.I.D.

16. Dispositif de production de gaz selon la revendication 12 à 15, **caractérisé en ce qu'**il est prévu une soupape d'injection (12) et/ou une soupape de régulation de pression (11) pour le réglage du flux massique du combustible liquide.

17. Dispositif de production de gaz selon l'une des revendications 12 à 16, **caractérisé en ce qu'**il est prévu un échangeur thermique (15) destiné au chauffage des éduits.

18. Dispositif de production de gaz selon la revendication 17, **caractérisé en ce que** l'échangeur thermique (15) est conçu de telle sorte qu'un éduit contenant de l'oxygène et de l'eau sont mélangés et chauffés dans l'échangeur thermique, puis amenés sous forme de mélange gazeux au réacteur (1) en vue de leur reformage autothermique.
